# EUROPEAN PATENT SPECIFICATION

(11) **EP 2 152 033 B1**
(45) Date of publication and mention of the grant of the patent: **26.10.2011**
(21) Application number: 08011848.2
(22) Date of filing: 01.07.2008
(51) Int. Cl.: H04W 12/06

(54) **Method and device for generating a time-dependent password**
Verfahren und Vorrichtung zur Erzeugung eines zeitabhängigen Kennworts
Procédé et dispositif de génération d'un mot de passe en fonction du temps

(43) Date of publication of application: 10.02.2010
(73) Proprietor: Vodafone Holding GmbH, 40213 Düsseldorf (DE)
(72) Inventor: Moutarazak, Said, 6163 BP Geleen (NL); Koraichi, Najib, 6333 CT Schimmert (NL)
(74) Representative: Jostarndt, Hans-Dieter

(56) References cited:
- EP-A- 1 833 219
- WO-A-2007/062787
- US-A- 5 226 080

## Description

### Technical Field

The invention relates to the generation of time-dependent passwords, particularly to the generation of time-synchronized one-time passwords. More specifically, the invention relates to a method for generating a time-dependent password in a mobile communication device. The invention further relates to a device for generating a time-dependent password in a mobile communication device and to a mobile communication device comprising the device.

### Background of the Invention

Conventional static passwords bear the risk to be discovered by unauthorized third parties. Protection against unauthorized access to restricted resources can be improved by using so-called one-time passwords (OTPs), which are valid only for one time. An OTP mechanism, commonly referred to as time-synchronised type OTP, involves synchronised time information for generating and validating OTPs. In regular time intervals, such as, for example, every minute, a security device or an application, which is usually called "token", generates a new OTP from current time information and a secret key assigned to the user. For validating the OTP, an authorisation station re-generates the OTP based on the secret key and own current time information using the same algorithm as the token and compares the self-generated password with the password generated by the token.

In the OTP environment described before, the time information used in the token and the time information used in the authorisation station have to be well synchronised. However, in OTP environments, certain time deviations are allowed, which means that the authorisation station accepts OTPs generated and based on time information that differs from that time of the authorisation station by a predefined time deviation. Typical allowed time deviations may be in the range of one or several minutes, for example.

The token may be a closed, tamper-resistant hardware system dedicated to the generation of OTPs, which stores the secret key of the user and which usually has a built-in clock for providing the time information. As an alternative, the token may be configured as a so-called "soft token", which is a software application run on a general-purpose processor.

The international patent application WO 2007/126227 describes a mobile communication device, such as, for example, a mobile phone or a PDA (Personal Data Assistant) or the like, which has an interface for accepting an IC chip (IC: Integrated Circuit) for generating time-synchronised type OTPs. The IC chip stores the user's secret key and comprises a module for generating the OTPs. The time information is provided by a base station and received by the radio frequency processing unit of the mobile communication device.

The IC chip allows for implementing the token for generating time-synchronised type OTPs in a mobile communication device. An external time signal provides the time information for generating the OTPs, such that a special clock for this purpose can be dispensed with. However, the time information is available only if the mobile communication device is connected to the base station. This means that the generation of OTPs is not possible, if the mobile communication device cannot be connected to the base station.

In the mobile communication device described WO 2007/062787 A1 a time-dependent client identity is determined using time information in a mobile communication device, which is synchronized with a time information in a mobile communication network. When the mobile communication device is out of network coverage, the local time information in the mobile communication device is used together with tracked time changes to compute a client identity.

The mobile communication device disclosed in EP 1 833 219 A1 comprises an application for calculating OTPs using current time and a numeric token, which is provided via a mobile communication network. In off-network operation, a stored numeric token is used, if it has not been expired.

### Summary of the Invention

It is an object of the present invention to allow for generating time-synchronised type OTPs in a device having access to an external time signal, when the device cannot receive the external time signal.

The object is achieved by a method comprising the features of claim 1 and by a device comprising the features of claim 12, Embodiments of the method and the device are given in the dependent claims.

According to a first aspect of the invention, a method of the type described before is proposed, which comprises the following steps:
- checking, whether the security device has access to an external time signal;
- requesting a user of the security device to enter the time information, if it is determined that the security device has no access to the external time signal; and
- generating a time-dependent password using the time information entered in response to the request.

According to a second aspect, the invention proposes a device for generating a time-dependent password using time information. The device comprises:
- a checking means for checking, whether an external time signal is accessible;
- a requesting means for requesting a user to enter the time information, if the checking means determines that the external time signal is not accessible, and
- a calculation means for generating a time-dependent password using the time information entered in response to the request.

The invention has the advantage that a time-dependent password can be generated in the absence of the external time signal. This is achieved by allowing the user of the security device to specify the time information needed for generating a time-dependent password, if no external time signal is received in the mobile communication device.

By allowing the user to input the time information, the invention contradicts the usual opinion that the mechanism for generating the time information needed for calculating time-dependent passwords is a sensitive component of the password generation, which has to be secured against access by the user. Particularly, it has been discovered that the possibility to generate a time-dependent password based on the time information provided by the user is very useful to bridge a temporarily absence of an external time signal.

However, if the external time signal can be received in the security device, the time signal can be used for generating the time-dependent password. This has the advantage that the risk of fraudulent misuse is reduced.

Therefore, in one embodiment of the method and the device, the time-dependent password is generated using the external time signal, if it is determined that the security device has access to the external time signal.

The time information used for generating the time-dependent password has to be synchronized with the time information used by the authorization station. However, the user may stay in a time zone different from the time zone in which the authorization station is located. If, in this case, the user entered his local time, the generated password would be invalid due to the time difference to the location of the authorization station.

Therefore, in one embodiment of the method and the device, the user is requested to specify a time zone to which the entered time information refers, the time information entered by the user is converted to the time zone of an authorization station for validating the password and the time-dependent password is generated using the converted time information.

In a further embodiment of the method and the device, the user is requested to enter an authentication code and the entered time information is only used for generating a time-dependent password, if the authentication code has been validated successfully.

This prevents an unauthorized third party that does not dispose of the authentication code from generating a password and making fraudulent use of it. Particularly, an unauthorized third party is prevented from generating and using a password that is valid in a future point in time.

Furthermore, one embodiment of the method and the device comprises the steps of:
- storing the entered time information;
- determining that the security device has access to the external time signal;
- checking, whether the entered time information refers to a future point in time compared to the currently received external time signal; and
- initiating an alarm routine, if the entered time information refers to a future point in time compared to the currently received time signal.

This provides security against an attack based on the aforementioned generation of a password, which is valid in a future point in time.

In order to prevent an attacker from gaining unauthorized access using such a password, in one embodiment of the method and the device, the password generated using the entered time information is being marked as invalid in the authorization station in response to the initiation of the alarm routine.

In a further embodiment of the method and the device, the user is requested to enter a secret key allocated to the user and the time-dependent password is generated using the secret key entered by the user.

Moreover, in one embodiment of the method and the device, the generated time-dependent password is displayed at the security device and/or the time-dependent password is transmitted from the security device to the authorisation station via a data network to which the security device is connected.

In one embodiment of the method, a mobile communication device comprises the security device.

Using a mobile communication device comprising security device for the generating the time-dependent password increases the user convenience, since a user who usually carries a mobile communication device does not need an additional device for generating the time-dependent password.

In one embodiment of the method and the device, the external time signal may be provided by the communication network to which the security device can be connected. Therefore, in this embodiment checking, whether the security device has access to the external time signal, comprises checking, whether the security device is connected to a communication network providing the external time signal.

Providing the external time signal in the communication network has the advantage that no additional equipment is needed to access the time signal, if a mobile communication device comprises the security device, since the mobile communication device usually has all components for connecting to a communication network.

In one embodiment of the invention, the device is a smartcard, which can be connected to a mobile communication device.

It is an advantage of this embodiment that the device can be provided to the user easily in the form of smartcard, which is connectable to his mobile communication device. The usage of a mobile communication device for generating the time-dependent password is especially convenient for the user due to the reasons described before. One further advantage of this embodiment is that the security mechanism of the smartcard prevents fraudulent use of the device.

In mobile communication, smartcards are used for identifying and authenticating a user to a mobile communication network. Advantageously, such smartcards can also host the device according to the invention. Therefore, in one embodiment of the invention, the smartcard comprises a subscriber identification module for identifying and/or authenticating a user to a mobile communication network.

Furthermore, the invention provides a computer program comprising software code portions for performing a method of the type described before, when the computer program is run on a processor.

Moreover, the invention proposes a mobile communication device comprising a device of the type before.

These and other aspects of the invention will be apparent from and elucidated with reference to the embodiments described hereinafter making reference to the accompanying drawings.

### Brief Description of the Drawings

In the drawings
- Fig. 1: is a schematic block diagram showing a mobile communication device for generating time-synchronised type OTPs, and
- Fig. 2: is a schematic flow chart illustrating a method for providing time infor- mation for generating the time-synchronised type OTPs.

### Detailed Description of Embodiments of the Invention

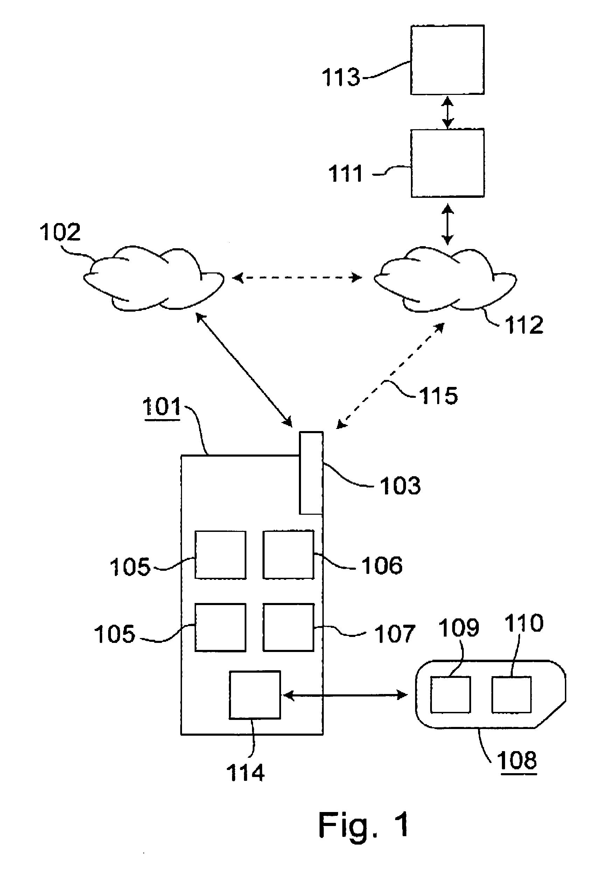

Figure 1 shows a mobile communication device 101, which can be connected to a mobile communication network (PLMN - Public Land Mobile Network) 102, which may be configured according to the GSM or UMTS standard, for example (GSM: Global System for Mobile communications; UMTS: Universal Mobile Telecommunications System). For connecting the mobile communication device 101 to the PLMN 102, the mobile communication device 101 comprises a radio interface 103. The radio interface 103 is coupled to a main processor 104 for controlling the operation of the mobile communication device 101. For interacting with the mobile user, the mobile communication device 101 comprises an input component 105 and a display component 106 both coupled to the main processor 104. Applications run by the main processor 104 and reference data are stored in a memory component 107 to which the main processor 104 has access.

The mobile communication device 101 interacts with a smartcard 108, which is inserted into a card reader unit 114 of the mobile communication device 101. The smartcard 108 includes a microprocessor 109 and a memory 110 and comprises a subscriber identification module allocated to the user of the mobile communication device 101. Particularly, the subscriber identification module includes information for identifying and authenticating the mobile user to the PLMN 102 and provides functionality for accessing services of the PLMN 102. The subscriber identification module may be configured in accordance with the type of the PLMN 102. If the PLMN 102 is a GSM or UMTS network, the subscriber identification module is a subscriber identity module (SIM) according to the GSM standard or a universal subscriber identity module (USIM) according to the UMTS standard.

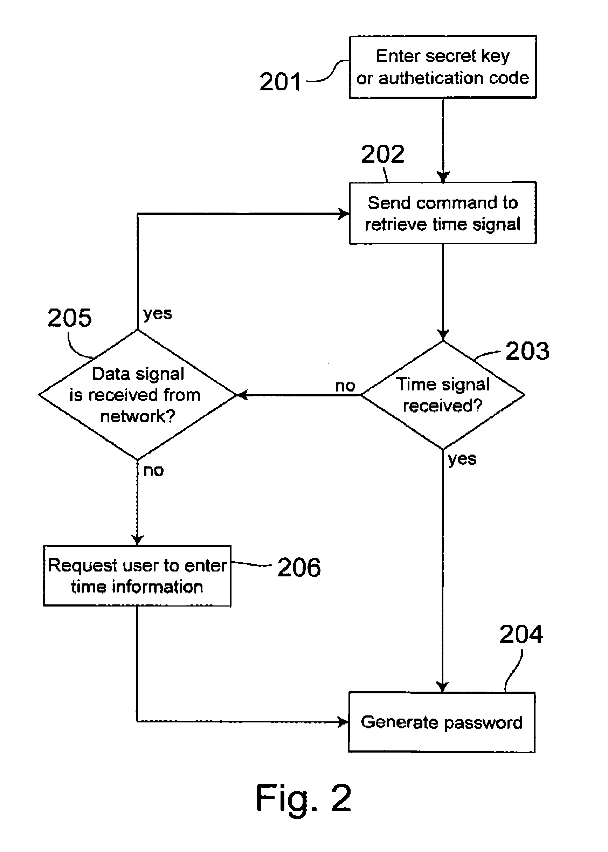

The mobile user has the authorisation to access a restricted resource. In one embodiment, the resource may be a web application or a web service hosted by a network server 113, which is connected to a data network 112. Access to the resource is controlled by an authorisation station 111, which denies access to the resource unless the user is identified and authenticated successfully. The network server 113 may comprise the authorisation station 111, or the authorisation station 111 may reside in another network server. In the embodiment depicted in figure 2, the network server 112 is connected to the data network 112 via the authorisation station 111. However, other network architectures are possible.

The authorisation station 111 performs the user authorisation using time-synchronised OTPs. This ensures a relatively high level of security of the access control. Thus, the web application may be a payment application, for example, that has to be secured efficiently against unauthorised access by third parties.

For generating time-synchronised OTPs, the mobile communication device 101 comprises an OTP application. The OTP application may be resident in the mobile terminal and run on the main processor 104 of the mobile communication device 101. In a different embodiment, the OTP application is resident in the smartcard 108 including the subscriber identification module. In this embodiment, the OTP application is stored in the memory 110 and run on the microprocessor 109 of the smartcard 108. This has the advantage that the OTP application is secured against unauthorized access by means of the security mechanism of the smartcard 108. In further embodiments, an OTP chip including the OTP application may be removably connected to the mobile terminal.

The mobile communication device 101 may be connected to the data network 112 via an access technology, such as, for example, a WLAN connection. In figure 1, this is schematically illustrated by means of the arrow 115. In this architecture, the mobile user may access the network server 113 using the mobile communication device 101 and OTPs generated in the mobile communication device 101 may be transmitted electronically from the mobile communication device 101 to the authorisation station 111. Furthermore, the PLMN 102 may be coupled to the data network 112, such that the mobile communication device 101 can be connected to the data network via the PLMN 102, if it is registered in the PLMN 102.

In another embodiment, the mobile user accesses the network server 113 using a further device connected to the data network 112, such as, for example, a personal computer. In this case, the OTP application outputs generated passwords at the mobile communication device 101. The user reads that generated password at the display component 106 of the mobile communication device 101 and enters the password at the device used for accessing the network server 113.

The OTP application provides a graphical user interface at the display component 106 of the mobile communication device 101 for depicting outputs to the user and for presenting input requests to the user. Moreover, the OTP application is configured to receive user inputs from the input component 105 of the mobile communication device 101. If the OTP application resides in the smartcard 108, the OTP application may access the functionalities of the mobile communication device 101 using SIM Toolkit commands, which, in general, are known to a person skilled in the art.

For generating time-synchronised OTPs, an algorithm is implemented in the OTP application, which is used to calculate OTPs based on time information and a secret key allocated to the user. The secret key may be a personal identification number (PIN), for example. The secret key may be entered by the user, when the OTP application is started or when the user requested the generation of a password. Likewise, it is possible that the secret key is stored securely in the mobile communication device 101, particularly in the smartcard 108. In this embodiment, the generation of a password may be possible only after an authorisation code entered by the user has been validated successfully by the OTP application. The authorisation code may be another PIN and differs from the secret key allocated to the user in that the secret key is used to calculate the passwords, while the authorisation code is used to unlock the password generation. Securing the OTP application with an authorisation code for unlocking the password generation has the advantage that an attacker has to use the mobile communication device 101 for generating passwords of the user, since the secret key is secured against access within the mobile communication device 101.

For validating the password generated by the OTP application, the authorisation station 111 re-computes the passwords using the user's secret key, which is also stored in the authorisation station 111, and its own time information. The time information used by the OTP application and the time information present in the authorisation station 111 have to be synchronised accurately enough. Usually, the authorisation station 111 allows for generating passwords computed using a time information with a predetermined deviation from the time information present and authorisation station 111. For this purpose, the authorisation station 111 determines that the password is valid, if it is calculated using a time from a predetermined time interval around the current time of the authorisation station 111. The time interval may be between 1 and 15 minutes, preferably between 2 and 4 minutes.

The OTP application retrieves the time information needed for generating the time-synchronised OTPs from the PLMN 102. For this purpose, the PLMN 102 includes a supplementary service providing a time signal. The service may be accessed using so-called USSD commands (USSD: Unstructured Supplementary Service Data), which are, in general, known to a person skilled in the art in general. However, retrieving the time information from the PLMN 102 requires that the mobile communication device 101 was connected to the PLMN 102. This is not always true, since it may happen that the mobile communication device 101 is out of coverage of the PLMN 102, for example. Therefore, the OTP application requests the user to enter time information into the mobile communication device 101, in case no time information can be received from the PLMN 102.

In one embodiment, a method schematically depicted in figure 2 is implemented in the OTP application for this purpose: After the user has entered his secret key or his authorisation code in step 201, the OTP application sends a command to retrieve time information from the PLMN 102 in step 202. The command is passed to the radio interface 103 of the mobile communication device 101, which transmits the command to the PLMN 102, if the mobile communication device 101 is connected to the PLMN 102. After having passed the command to the radio interface 103 the OTP application checks, whether the command is responded within a predetermined time interval in step 203. This means that the OTP application checks, whether the time signal is received during the time interval. If the time signal is received in time, the OTP application computes a password based on the received time information and the secret key of the user in step 204.

If the OTP application determines in step 203 that no time information has been received from the PLMN 102 in the predetermined time interval, the OTP application checks, whether the mobile communication device 101 is connected to the PLMN 102 in step 205. This may be done by checking, whether the mobile communication device receives a predetermined data signal broadcasted in the PLMN 102, such as, for example, a signal identifying the PLMN 102. If it is determined in step 205 that the mobile communication device 101 is registered in the PLMN 102, the OTP application preferably goes back to step 202 and resends the command to retrieve the time information. However, if it is determined in step 205 that the mobile communication device 101 is not connected to the PLMN 102, the OTP application requests the user to enter time information at the mobile communication device 101. After having received the user input, the OTP application calculates a password using the time information specified by the user in step 204.

For requesting the user to input the time information, the user interface of the OTP application presented at the display component 106 of the mobile communication device may provide an input field, which may be filled in by the user using the input component 105 of the mobile communication device 101. The user may receive the time information from any available source. For example, this may be his wristwatch or a public watch in the vicinity of his position.

In order for the calculated password to be valid, the password has to be calculated using the time information present in the authorisation station 111. Particularly, this means that the time information used for the calculation should refer to the same time zone as the time information of the authorisation station 111. Therefore, in one embodiment, the user is requested to input a time information referring to the time zone of authorisation station 111 in step 206. This requires knowledge about the time zone of the authorisation station 111 and about the time shift between this time zone and the current time zone of the user.

In another embodiment, the user is requested to input his local time and to specify his current time zone. For the specification of the time zone, a list of the existing time zones may be presented to the user, such that the user can specify his time zone by choosing it from the list. Using the time information entered by the user and the information about the time zone the time information refers to, the OTP application calculates the local time of the authorisation station 111 and uses this calculated time to generate the password in step 204.

In order to prevent that an attacker uses the mobile communication device 101 to generate a password that will be valid in the future by inputting time information relating to a future point in time, the input of the time information by the user may be secured by an authorisation code. This means that the OTP application requests the user to enter the authorisation code besides the time information. The authorisation code is also stored securely in the mobile communication device 101, particularly in the smartcard 108. In this embodiment, the OTP application validates the authorisation code before generating a password using the time information given by the user.

Furthermore, in one embodiment, the OTP application stores at least the time information, when it calculates and outputs a password based on time information specified by the user. Particularly, the time information may be stored securely in the smartcard 108. After having stored the time information, the OTP application monitors, whether the mobile communication device 101 connects to the PLMN 102 again. This may be done by sending commands to retrieve time information from the PLMN 102 or by checking in regular time intervals, whether a predetermined data signal broadcasted in the PLMN 102 is received in the mobile communication device 101. Again, this data signal may be a signal identifying the PLMN 102 that is broadcasted in the PLMN in regular time intervals.

If the OTP application determines that the mobile communication device 101 is connected to the PLMN 102 again, the OTP application checks, whether the time information used for calculating the password refers to a future point in time. If this is true, an alarm routine is started, since in this case an attacker might have generated the password for fraudulent use in the future. For the aforementioned check, the OTP application compares time information currently retrieved from the PLMN 102 and the stored time information. If it is determined that the stored time information referred to the future compared to the currently received time information, the OTP application starts the alarm routine.

The alarm routine may comprise informing the user that a password has been generated for a future point in time. If the user judges that the password might have been generated for fraudulent use, he may inform the authorization station 111. In another embodiment, the OTP application may inform the authorization station 111 automatically. For this purpose, the OTP application may generate a corresponding message specifying the time information in question, and the OTP application may control the mobile communication device 101 to transmit the message to the authorisation station 111. The message may be transmitted to the authorisation station 111 via the PLMN 102 or via another data connection between the mobile communication device 101 and the authorisation station 111.

After having been informed about the possible misuse, steps can be taken in the authorisation station 111 to prevent an unauthorised access to the network server 113 using the password in question. This may be done by blocking access to the network server 113 with this password. Particularly, the password generated for the future point in time may be marked as invalid, such that this password cannot be used as an authorisation for accessing the network server 113.

While the invention has been illustrated and described in detail in the drawings and foregoing description, such illustration and description are to be considered illustrative or exemplary and not restrictive; the invention is not limited to the disclosed embodiments. Particularly, the invention is not limited to a download of an application or program code to smartcard 106. A person skilled in the art recognises that other data can be downloaded to the smartcard 106 in the same way as it has been described before in connection with the download of a program code of an application. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for generating a time-dependent password in a security device (101; 108) using time information, the method comprising checking, whether the security device has access to an external time signal, **characterized in that** the method further comprises the steps of:
- requesting a user of the security device to enter the time information, if it is determined that the security device has no access to the external time signal; and
- generating a time-dependent password using the time information entered in response to the request.

2. The method according to claim 1, wherein the time-dependent password is generated using the external time signal, if it is determined that the security device (101; 108) has access to the external time signal.

3. The method according to one of the preceding claims, wherein the user is requested to specify a time zone to which the entered time information refers, wherein the time information entered by the user is converted to the time zone of an authorization station (111) for validating the password and wherein the time-dependent password is generated using the converted time information.

4. The method according to one of the preceding claims, wherein the user is requested to enter an authentication code and wherein the entered time information is only used for generating a time-dependent password, if the authentication code has been validated successfully.

5. The method according to one of the preceding claims, further comprising the steps of:
- storing the entered time information;
- determining that the security device (101; 108) has access to the external time signal;
- checking, whether the entered time information refers to a future point in time compared to the currently received external time signal; and
- initiating an alarm routine, if the entered time information refers to a future point in time compared to the currently received time signal.

6. The method according to claim 5, wherein the password generated using the entered time information is marked as invalid in the authorization station (111) in response to the initiation of the alarm routine.

7. The method according to one of the preceding claims, wherein the user is requested to enter a secret key allocated to the user and wherein the time-dependent password is generated using the secret key entered by the user.

8. The method according to one of the preceding claims, wherein the generated time-dependent password is displayed at the security device (101; 108) and/or wherein the time-dependent password is transmitted from the security device (101; 108) to the authorisation station (111) via a data network to which the security device (101; 108) is connected.

9. The method according to one of the preceding claims, wherein a mobile communication device (101) comprises the security device (101; 108).

10. The method according to one of the preceding claims, wherein checking whether the security device (101; 108) has access to the external time signal comprises checking whether the security device (101; 108) is connected to a communication network (102) providing the external time signal.

11. A computer program comprising software code portions for performing a method according to one of the preceding claims, when the computer program is run on a processor (104; 109).

12. A device (101; 108) for generating a time dependent password using time information comprising÷ a checking means for checking, whether an external time signal is accessible, **characterized in that** the device further comprises a requesting means for requesting a user to enter the time information, if the checking means determines that the external time signal is not accessible, and a calculation means for generating a time-dependent password using the time information entered in response to the request.

13. A device (101; 108) according to claim 12, wherein the device is a smartcard (108), which can be connected to a mobile communication device (101).

14. A device according to claim 13, wherein the smartcard (108) comprises a subscriber identification module for identifying and/or authenticating a user to a mobile communication network (102).

15. A mobile communication (101) device comprising a device (101; 108) according to one of the claims 12 to 14.

## Patentansprüche

1. Verfahren zum Erzeugen eines zeitabhängigen Kennworts in einer Sicherheitsvorrichtung (101; 108) unter Verwendung von Zeitinformationen, wobei das Verfahren das Prüfen umfasst, ob die Sicherheitsvorrichtung Zugriff auf ein externes Zeitsignal hat, **dadurch gekennzeichnet, dass** das Verfahren ferner die folgenden Schritte umfasst:
- Auffordern eins Nutzers der Sicherheitsvorrichtung zur Eingabe der Zeitinformationen, falls ermittelt wird, dass die Sicherheitsvorrichtung keinen Zugriff auf das externe Zeitsignal hat; und
- Erzeugen eines zeitabhängigen Kennworts unter Verwendung der in Reaktion auf die Aufforderung eingegebenen Zeitinformationen.

2. Verfahren nach Anspruch 1, wobei das zeitabhängige Kennwort unter Verwendung des externen Zeitsignals erzeugt wird, falls ermittelt wird, dass die Sicherheitsvorrichtung (101; 108) Zugriff auf das externe Zeitsignal hat.

3. Verfahren nach einem der vorhergehenden Ansprüche, wobei der Nutzer aufgefordert wird, eine Zeitzone anzugeben, auf die sich die eingegebenen Zeitinformationen beziehen, wobei die durch den Nutzer eingegebenen Zeitinformationen in die Zeitzone einer Autorisierungsstation (111) zur Prüfung der Gültigkeit des Kennworts umgesetzt werden und wobei das zeitabhängige Kennwort unter Verwendung der umgesetzten Zeitinformationen erzeugt wird.

4. Verfahren nach einem der vorhergehenden Ansprüche, wobei der Nutzer aufgefordert wird, einen Authentisierungscode einzugeben, und wobei die eingegebenen Zeitinformationen nur dann zum Erzeugen eines zeitabhängigen Kennworts verwendet werden, wenn die Gültigkeit des Authentisierungscodes erfolgreich festgestellt worden ist.

5. Verfahren nach einem der vorhergehenden Ansprüche, wobei das Verfahren ferner die folgenden Schritte umfasst:
- Speichern der eingegebenen Zeitinformationen;
- Bestimmen, dass die Sicherheitsvorrichtung (101; 108) Zugriff auf das externe Zeitsignal hat;
- Prüfen, ob sich die eingegebenen Zeitinformationen im Vergleich zu dem gegenwärtig empfangenen externen Zeitsignal auf einen künftigen Zeitpunkt beziehen; und
- Initiieren einer Alarmroutine, falls sich die eingegebenen Zeitinformationen im Vergleich zu dem gegenwärtig empfangenen Zeitsignal auf einen künftigen Zeitpunkt beziehen.

6. Verfahren nach Anspruch 5, wobei das unter Verwendung der eingegebenen Zeitinformationen erzeugte Kennwort in der Autorisierungsstation (111) in Reaktion auf die Initiierung der Alarmroutine als ungültig **gekennzeichnet** wird.

7. Verfahren nach einem der vorhergehenden Ansprüche, wobei der Nutzer aufgefordert wird, einen dem Nutzer zugeordneten Geheimschlüssel einzugeben, und wobei das zeitabhängige Kennwort unter Verwendung des von dem Nutzer eingegebenen Geheimschlüssels erzeugt wird.

8. Verfahren nach einem der vorhergehenden Ansprüche, wobei das erzeugte zeitabhängige Kennwort bei der Sicherheitsvorrichtung (101; 108) angezeigt wird und/oder wobei das zeitabhängige Kennwort über ein Datennetz, mit dem die Sicherheitsvorrichtung (101; 108) verbunden ist, von der Sicherheitsvorrichtung (101; 108) an die Autorisierungsstation (111) gesendet wird.

9. Verfahren nach einem der vorhergehenden Ansprüche, wobei eine Mobilkommunikationsvorrichtung (101) die Sicherheitsvorrichtung (101; 108) umfasst.

10. Verfahren nach einem der vorhergehenden Ansprüche, wobei das Prüfen, ob die Sicherheitsvorrichtung (101; 108) Zugriff auf das externe Zeitsignal hat, das Prüfen umfasst, ob die Sicherheitsvorrichtung (101; 108) mit einem Kommunikationsnetz (102) verbunden ist, das das externe Zeitsignal bereitstellt.

11. Computerprogramm, das Softwarecodeabschnitte umfasst, um ein Verfahren nach einem der vorhergehenden Ansprüche auszuführen, wenn das Computerprogramm in einem Prozessor (104; 109) ausgeführt wird.

12. Vorrichtung (101; 108) zum Erzeugen eines zeitabhängigen Kennworts unter Verwendung von Zeitinformationen, wobei die Vorrichtung ein Prüfmittel umfasst, um zu prüfen, ob auf ein externes Zeitsignal zugegriffen werden kann, **dadurch gekennzeichnet, dass** die Vorrichtung ferner umfasst:
ein Aufforderungsmittel, um einen Nutzer dazu aufzufordern einzugeben die Zeitinformationen, wenn das Prüfmittel bestimmt, dass auf das externe Zeitsignal nicht zugegriffen werden kann, und
ein Berechnungsmittel zum Erzeugen eines zeitabhängigen Kennworts unter Verwendung der in Reaktion auf die Aufforderung eingegebenen Zeitinformationen.

13. Vorrichtung (101; 108) nach Anspruch 12, wobei die Vorrichtung eine Chipkarte (108) ist, die mit einer Mobilkommunikationsvorrichtung (101) verbunden werden kann.

14. Vorrichtung nach Anspruch 13, wobei die Chipkarte (108) ein Teilnehmeridentifizierungsmodul zum Identifizieren und/oder Authentifizieren eines Nutzers für ein Mobilkommunikationsnetz (102) umfasst.

15. Mobilkommunikationsvorrichtung (101), die eine Vorrichtung (101; 108) nach einem der Ansprüche 12 bis 14 umfasst.

## Revendications

1. Procédé de génération d'un mot de passe dépendant de l'heure dans un dispositif de sécurité (101 ; 108) à partir d'informations horaires, le procédé comprenant une étape consistant à vérifier si le dispositif de sécurité a accès à un signal horaire externe, le procédé étant **caractérisé en ce qu'**il comprend en outre les étapes consistant à :
- demander à un utilisateur du dispositif de sécurité d'entrer les informations horaires, s'il est déterminé que le dispositif de sécurité n'a pas accès au signal horaire externe ; et
- générer un mot de passe dépendant de l'heure à partir des informations horaires entrées en réponse à la demande.

2. Procédé selon la revendication 1, dans lequel le mot de passe dépendant de l'heure est généré à partir du signal horaire externe, s'il est déterminé que le dispositif de sécurité (101 ; 108) a accès au signal horaire externe.

3. Procédé selon l'une des revendications précédentes, dans lequel il est demandé à l'utilisateur de préciser un fuseau horaire auquel se réfèrent les informations horaires entrées, dans lequel les informations horaires entrées par l'utilisateur sont converties en fonction du fuseau horaire d'une station d'autorisation (111) pour valider le mot de passe, et dans lequel le mot de passe dépendant de l'heure est généré à partir des informations horaires converties.

4. Procédé selon l'une des revendications précédentes, dans lequel il est demandé à l'utilisateur d'entrer un code d'authentification, et dans lequel les informations horaires entrées sont utilisées uniquement dans le but de générer un mot de passe dépendant de l'heure, si le code d'authentification a été validé de manière satisfaisante.

5. Procédé selon l'une des revendications précédentes, comprenant en outre les étapes consistant à :
- stocker les informations horaires entrées ;
- déterminer si le dispositif de sécurité (101 ; 108) a accès au signal horaire externe ;
- vérifier si les informations horaires entrées font référence à un point futur dans le temps comparé au signal horaire externe en cours de réception ; et
- exécuter une routine d'alarme, si les informations horaires entrées font référence à un point futur dans le temps comparé au signal horaire externe en cours de réception.

6. Procédé selon la revendication 5, dans lequel le mot de passe généré à partir des informations horaires entrées est signalé comme non valide dans la station d'autorisation (111) en réponse à l'exécution de la routine d'alarme.

7. Procédé selon l'une des revendications précédentes, dans lequel il est demandé à l'utilisateur d'entrer une clé secrète qui lui est attribuée, et dans lequel le mot de passe dépendant de l'heure est généré à partir de la clé secrète entrée par l'utilisateur.

8. Procédé selon l'une des revendications précédentes, dans lequel le mot de passe dépendant de l'heure généré est affiché sur le dispositif de sécurité (101 ; 108), et/ou dans lequel le mot de passe dépendant de l'heure est transmis par le dispositif de sécurité (101 ; 108) à la station d'autorisation (111) via un réseau de données auquel le dispositif de sécurité (101 ; 108) est connecté.

9. Procédé selon l'une des revendications précédentes, dans lequel un dispositif de communication mobile (101) intègre le dispositif de sécurité (101 ; 108).

10. Procédé selon l'une des revendications précédentes, dans lequel l'étape consistant à vérifier si le dispositif de sécurité (101 ; 108) a accès au signal horaire externe comprend en particulier le fait de vérifier si le dispositif de sécurité (101 ; 108) est connecté à un réseau de communication (102) fournissant le signal horaire externe.

11. Programme informatique comprenant des parties de code logiciel destinées à la mise en oeuvre d'un procédé selon l'une des revendications précédentes, lorsque le programme informatique est exécuté sur un processeur (104 ; 109).

12. Dispositif (101, 108) destiné à généré un mot de passe dépendant de l'heure à partir d'informations horaires, comprenant un moyen de vérification destiné à vérifier si un signal horaire externe est accessible, le dispositif étant **caractérisé en ce qu'**il comprend en outre :
un moyen de demande destiné à demander à un utilisateur d'entrer les informations horaires, si le moyen de vérification détermine que le signal horaire externe n'est pas accessible, et
un moyen de calcul destiné à générer un mot de passe dépendant de l'heure à partir des informations horaires entrées en réponse à la demande.

13. Dispositif (101 ; 108) selon la revendication 12, dans lequel le dispositif est une carte à puce (108) qui peut être connectée à un dispositif de communication mobile (101).

14. Dispositif selon la revendication 13, dans lequel la carte à puce (108) comprend un module d'identification d'abonné destiné à identifier et/ou à authentifier un utilisateur sur un réseau de communication mobile (102).

15. Dispositif de communication mobile (101) comprenant un dispositif (101 ; 108) selon l'une des revendications 12 à 14.
